# DEMANDE DE BREVET EUROPEEN

(11) **EP 2 565 493 A1**
(43) Date de publication de la demande: **06.03.2013**
(21) Numéro de dépôt: 12177572.0
(22) Date de dépôt: 24.07.2012
(51) Int. Cl.: F16G 11/00, F16G 11/14, B63B 21/04, F16G 11/04, B63B 21/08

(54) **Dispositif de guidage d'un cordage**

(30) Priorité: 02.09.2011 FR 1157807
(71) Demandeur: Wichard, 63300 Thiers (FR)
(72) Inventeur: Guihard, Mathieu, 44600 Saint Nazaire (FR)
(74) Mandataire: Maureau, Philippe

(57) **Abrégé**

Ce dispositif de guidage (2) comporte une gorge de guidage, en forme générale de U, destinée à guider un premier cordage (6), deux lumières de guidage (7) destinées à guider une boucle fermée d'un second cordage (8) servant à la fixation du dispositif de guidage sur un point d'attache fixe (9) ou sur une pièce mobile à manoeuvrer, les deux lumières de guidage (7) s'étendant de part et d'autre du plan défini par la gorge de guidage, et un plot de fixation (11) destiné à fixer la boucle fermée du second cordage (8) sur le dispositif de guidage. Le dispositif de guidage (2) comporte en outre une première et une deuxième ouvertures de passage (15) débouchant chacune respectivement dans l'une des lumières de guidage (7), chacune des première et deuxième ouvertures de passage (15) étant agencée pour permettre l'introduction du second cordage (8) dans la lumière de guidage correspondante.

## Description

La présente invention concerne un dispositif de guidage d'un cordage.

Il est connu d'utiliser, notamment sur un voilier, des poulies pour dévier un cordage de son trajet initial, ou des palans, par exemple pour soulever des charges ou border des voiles à l'aide d'un cordage. Ces différents éléments constituent des dispositifs de guidage d'un cordage.

Les opérations de fabrication des palans et poulies conventionnels sont complexes parce qu'elles font appel à plusieurs technologies en cascade. Par exemple, pour des poulies en aluminium, leur fabrication comporte notamment des étapes de découpe, d'usinage ou de moulage, et de traitement de surface.

En outre, ces palans et ces poulies nécessitent l'assemblage en atelier d'un grand nombre de pièces, ce qui augmente fortement leurs coûts de fabrication.

De plus, la présence de pièces en mouvement dans ces différents éléments a un impact direct sur leur fiabilité.

La fixation des poulies et des palans de l'art antérieur sur les pièces à manoeuvrer telles que des voiles, des espars, des gréements ou toute autre pièce mobile, ou sur un point d'attache fixe nécessite des outils ou des épissures, ce qui complique leur fixation. En outre, la fixation des poulies et des palans de l'art antérieur ne permet pas toujours une orientation de ces derniers exactement dans la direction désirée et induit également des dégradations irréversibles sur les éléments auxquels ils sont fixés.

Les poulies et les palans de l'art antérieur, de par leur structure, sont également encombrants et d'un poids élevé.

Le document WO 2008/065277 divulgue un dispositif de guidage d'un cordage permettant de pallier au moins en partie les inconvénients des poulies et palans de l'art antérieur.

Le dispositif de guidage décrit dans le document WO 2008/065277 comporte :
- une gorge de guidage, en forme générale de U, destinée à guider un premier cordage,
- deux lumières de guidage destinées à guider une boucle fermée d'un second cordage servant à la fixation du dispositif de guidage sur un point d'attache fixe ou sur une pièce mobile à manoeuvrer, les deux lumières de guidage s'étendant de part et d'autre du plan défini par la gorge de guidage, et
- un plot de fixation destiné à fixer la boucle fermée du second cordage sur le dispositif de guidage.

Un tel dispositif de guidage permet le guidage d'un cordage circulant, c'est-à-dire susceptible de se déplacer vis-à-vis du dispositif, tout en étant dépourvu de pièce mobile, ce qui lui confère une grande fiabilité et une grande simplicité.

En outre, un tel dispositif de guidage permet une libération du premier cordage en tout point de ce dernier, et non pas uniquement par l'une de ces extrémités.

De plus, la réalisation de la fixation d'un tel dispositif sur un point d'attache fixe ou une pièce mobile à manoeuvrer à l'aide d'une boucle de cordage ne nécessite pas d'outil, et permet une orientation aisée du dispositif dans toutes les directions.

Cependant, la fixation d'un tel dispositif de guidage sur un point d'attache fixe ou une pièce mobile à manoeuvrer nécessite successivement le passage de la boucle du second cordage autour du plot de fixation, le passage de l'extrémité libre de la boucle du second cordage de l'extérieur vers l'intérieur dans l'une des lumières de guidage, le passage de l'extrémité libre de la boucle du second cordage autour ou dans une ouverture délimitée par le point d'attache fixe ou la pièce mobile à manoeuvrer, le passage de l'extrémité libre de la boucle du second cordage de l'intérieur vers l'extérieur dans l'autre lumière de guidage, et enfin le passage de l'extrémité libre de la boucle du second cordage de nouveau autour du plot de fixation. Il en résulte ainsi un montage long et malaisé du dispositif de guidage.

La fixation d'un tel dispositif de guidage ne permet pas également d'assurer toujours une orientation satisfaisante de ce dernier par rapport à la direction de circulation du premier cordage.

La présente invention vise à remédier à ces inconvénients.

Le problème technique à la base de l'invention consiste donc à fournir un dispositif de guidage d'un cordage de structure simple, de faibles coûts de production, fiable, léger et peu encombrant, tout en permettant un montage aisé et rapide sur un point d'attache fixe ou une pièce mobile à manoeuvrer.

A cet effet, la présente invention concerne un dispositif de guidage d'un cordage, comportant :
- une gorge de guidage, en forme générale de U, destinée à guider un premier cordage,
- deux lumières de guidage destinées à guider une boucle fermée d'un second cordage servant à la fixation du dispositif de guidage sur un point d'attache fixe ou sur une pièce mobile à manoeuvrer, les deux lumières de guidage s'étendant de part et d'autre du plan défini par la gorge de guidage, et
- un plot de fixation destiné à fixer la boucle fermée du second cordage sur le dispositif de guidage,
**caractérisé en ce qu'**il comporte en outre une première et une deuxième ouvertures de passage débouchant chacune respectivement dans l'une des lumières de guidage, chacune des première et deuxième ouvertures de passage étant agencée pour permettre l'introduction du second cordage dans la lumière de guidage correspondante.

Les première et deuxième ouvertures de passage débouchant dans les lumières de guidage permettent une introduction aisée et rapide du second cordage dans les lumières de guidage, et ce sans nécessiter une orientation de la boucle fermée du second cordage successivement dans un nombre important de différentes directions. En effet, la fixation de la boucle fermée du second cordage peut être aisément réalisée par exemple en passant une portion de la boucle fermée autour du plot de fixation, en introduisant l'extrémité libre de la boucle dans ou autour du point d'attache fixe ou de la pièce mobile à manoeuvrer, en passant l'extrémité libre de la boucle autour du plot de fixation, et finalement en introduisant chaque brin de la boucle fermée, situé en regard d'une lumière de guidage, dans ladite lumière de guidage via l'ouverture de passage correspondante.

La présence des première et deuxième ouvertures de passage débouchant dans les lumières de guidage permet ainsi de faciliter la fixation de la boucle du second cordage sur le dispositif de guidage, et donc de simplifier le montage de ce dernier sur un point d'attache fixe ou une pièce mobile à manoeuvrer. Bien entendu, les première et deuxième ouvertures de passage permettent également de faciliter le démontage du dispositif de guidage.

De plus, comme cela sera explicité ci-après, la présence des ouvertures de passage permet de fixer le dispositif selon une première orientation dans laquelle la gorge de guidage s'étend suivant un premier plan ou selon une deuxième orientation dans laquelle la gorge de guidage s'étend suivant un deuxième plan, perpendiculaire au premier plan. Ces dispositions assurent une flexibilité d'orientation du dispositif de guidage par rapport au point d'attache fixe ou à la pièce mobile à manoeuvrer. Il en résulte la possibilité d'obtenir une orientation satisfaisante du dispositif de guidage par rapport à la direction de circulation du premier cordage, et ce quelle que soit l'orientation du point d'attache fixe ou de la pièce mobile à manoeuvrer.

Selon un mode de réalisation de l'invention, le plot de fixation s'étend sensiblement parallèlement au plan défini par la gorge de guidage. Avantageusement, le plot de fixation est situé à l'opposé des deux lumières de guidage par rapport à la gorge de guidage.

Selon un mode de réalisation de l'invention, chacune des première et deuxième ouvertures de passage s'étend sensiblement parallèlement au plot de fixation.

Avantageusement, les lumières de guidage sont décalées par rapport au centre de la gorge de guidage. Ces dispositions permettent d'empêcher l'entraînement en rotation du dispositif de guidage lorsque la charge appliquée par le premier cordage sur ce dernier est élevée.

De façon avantageuse, le dispositif de guidage comprend des premiers moyens de retenue agencés pour retenir le second cordage dans les lumières de guidage. De tels moyens de retenue permettent d'empêcher un échappement accidentel du second cordage hors des lumières de guidage, notamment lorsqu'il n'y a plus aucune tension appliquée sur le second cordage ou lors des déplacements du dispositif de guidage par rapport au point d'attache ou de la pièce à manoeuvrer.

Les premiers moyens de retenue comportent par exemple deux bossages de retenue ménagés chacun respectivement en regard de l'une des première et deuxième ouvertures de passage, chaque bossage de retenue étant agencé pour retenir des brins du second cordage dans la lumière de guidage correspondante.

Chaque bossage de retenue s'étend par exemple sensiblement parallèlement au plan défini par la gorge de guidage, et de préférence sensiblement parallèlement au plot de fixation.

De façon préférentielle, le dispositif de guidage comprend des deuxièmes moyens de retenue agencés pour retenir le premier cordage dans la gorge de guidage. De tels moyens de retenue permettent d'empêcher un échappement accidentel du premier cordage hors du dispositif de guidage, notamment lors des déplacements du premier cordage et du dispositif de guidage.

Les deuxièmes moyens de retenue délimitent avantageusement un passage débouchant dans la gorge de guidage et présentant une largeur inférieure à la largeur de la gorge de guidage.

Selon un mode de réalisation de l'invention, le dispositif de guidage comprend une portion centrale et deux portions latérales disposées de part et d'autre de la portion centrale, la portion centrale et les deux portions latérales délimitant la gorge de guidage.

La portion centrale présente de préférence une section transversale en forme générale de poire. Le plot de fixation s'étend avantageusement entre les portions latérales.

De préférence, les deuxièmes moyens de retenue comportent deux retours de retenue ménagés sur la portion centrale et dirigés l'un vers l'autre.

De façon avantageuse, le plot de fixation comporte une tige dont l'une des extrémités s'étend à partir de la surface extérieure de la portion centrale et dont l'autre extrémité est équipée d'une tête, la tête du plot de fixation délimitant, avec la portion centrale, les portions latérales et la tige du plot de fixation, une gorge de retenue destinée à retenir deux portions d'extrémité opposées de la boucle fermée du second cordage.

Selon un mode de réalisation de l'invention, la tête du plot de fixation s'étend sensiblement perpendiculairement au plan défini par la gorge de guidage.

Préférentiellement, le dispositif de guidage comprend des troisièmes moyens de retenue agencés pour retenir les portions d'extrémité du second cordage dans la gorge de retenue. De tels moyens de retenue permettent d'empêcher un échappement accidentel des portions d'extrémité du second cordage hors du dispositif de guidage, notamment lorsqu'il n'y a plus aucune tension appliquée sur le second cordage.

Les troisièmes moyens de retenue comportent par exemple deux ergots de retenue ménagés chacun respectivement sur l'une des portions latérales.

De préférence, la gorge de guidage s'étend sensiblement sur un demi-cercle.

Selon un mode de réalisation de l'invention, le dispositif de guidage est monobloc. Compte tenu de cette structure monobloc du dispositif de guidage, sa fabrication ne nécessite pas d'étape d'assemblage en atelier, ce qui facilite la fabrication du dispositif et diminue donc son coût de production.

La présente invention concerne également un ensemble comprenant un dispositif de guidage selon l'invention, et une boucle fermée d'un cordage destiné à servir à la fixation du dispositif de guidage sur un point d'attache fixe ou sur une pièce mobile à manoeuvrer.

De préférence, chacune des première et deuxième ouvertures de passage délimite un passage de largeur supérieure ou égale au diamètre du cordage destiné à servir à la fixation du dispositif de guidage.

De façon avantageuse, les troisièmes moyens de retenue et le plot de fixation délimitent deux passages de largeur inférieure au diamètre du cordage destiné à servir à la fixation du dispositif de guidage.

Selon un mode de réalisation de l'invention, l'ensemble comprend en outre un cordage destiné à circuler dans la gorge de guidage. Avantageusement, le passage délimité par les deuxièmes moyens de retenue présente une largeur inférieure au diamètre du cordage destiné à circuler dans la gorge de guidage.

De toute façon l'invention sera bien comprise à l'aide de la description qui suit en référence au dessin schématique annexé représentant, à titre d'exemple non limitatif, une forme d'exécution de ce dispositif de guidage.
Figure 1 est une vue en perspective d'un dispositif de guidage selon l'invention.
Figure 2 est une vue de côté du dispositif de guidage de la figure 1.
Figures 3 et 4 sont respectivement des vues de dessus et de dessous du dispositif de guidage de la figure 1.
Figure 5 est une vue de côté d'une variante de réalisation du dispositif de guidage de la figure 1, en position de fixation sur un point d'attache fixe, le dispositif de guidage étant fixé selon un premier procédé de fixation.
Figure 6 est une vue en perspective de côté du dispositif de guidage de la figure 5, en position de fixation sur un point d'attache fixe, le dispositif de guidage étant fixé selon un deuxième procédé de fixation.

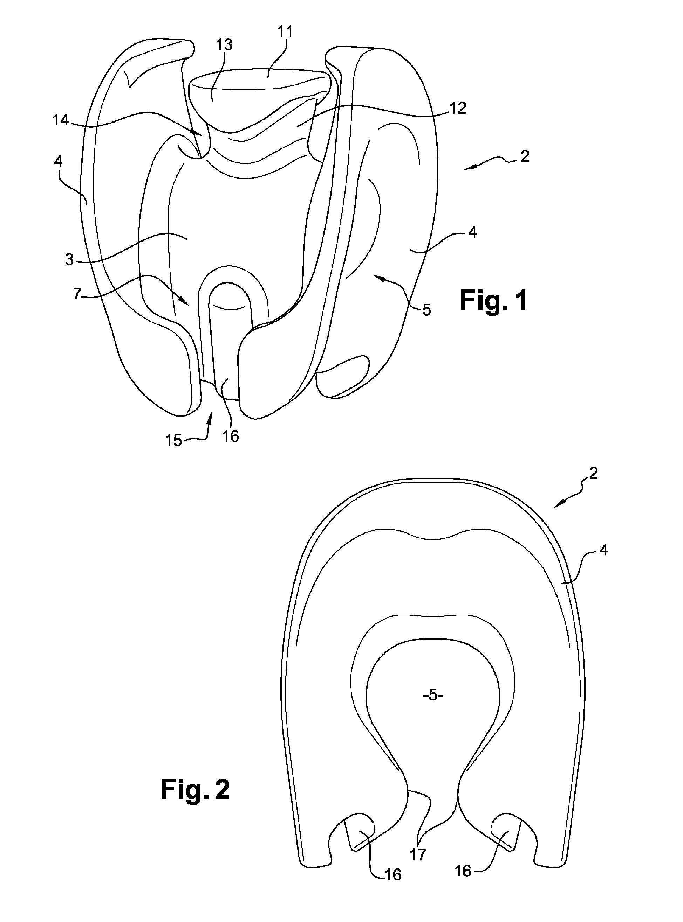

Les figures 1 à 4 représentent un dispositif de guidage 2 d'un cordage. Le dispositif de guidage 2 est monobloc et est avantageusement réalisé en un matériau dur et glissant. Le dispositif de guidage 2 est de préférence métallique.

Le dispositif de guidage 2 comporte une portion centrale 3 en forme générale de U inversé et deux portions latérales 4 disposées de part et d'autre de la portion centrale 3. La portion centrale présente de préférence une section transversale en forme générale de poire.

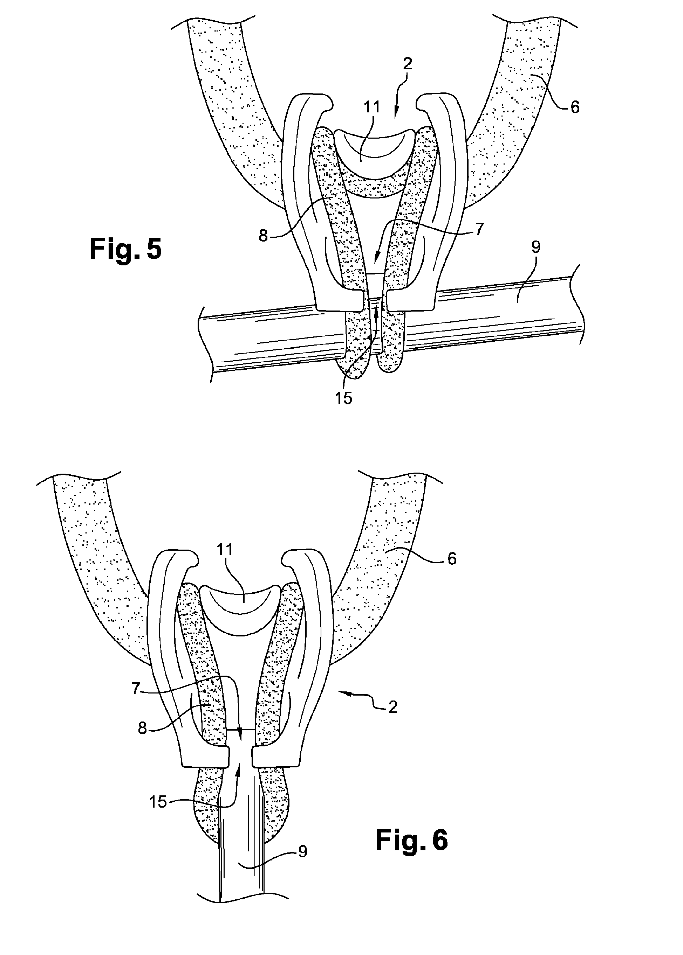

La portion centrale 3 et les deux portions latérales 4 délimitent une gorge de guidage 5, en forme générale de U, destinée à guider un premier cordage 6 (voir figures 5 et 6) circulant sur le dispositif de guidage 2. La gorge de guidage 5 s'étend sensiblement sur un demi-cercle.

Le dispositif de guidage 2 comporte également deux lumières de guidage 7 destinées à guider une boucle fermée d'un second cordage 8 (voir figures 5 et 6) servant à la fixation du dispositif de guidage 2 sur un point d'attache fixe 9 (voir figures 5 et 6) ou sur une pièce mobile à manoeuvrer. Les deux lumières de guidage 7 s'étendent de part et d'autre du plan défini par la gorge de guidage 5.

Comme montré plus particulièrement sur la figure 1, le dispositif de guidage 2 comporte en outre un plot de fixation 11 destiné à fixer la boucle fermée du second cordage 8 sur le dispositif de guidage. Le plot de fixation 11 est positionné entre les portions latérales 4 et est situé à l'opposé des deux lumières de guidage 7 par rapport à la gorge de guidage 5. Le plot de fixation s'étend sensiblement parallèlement au plan défini par la gorge de guidage 5.

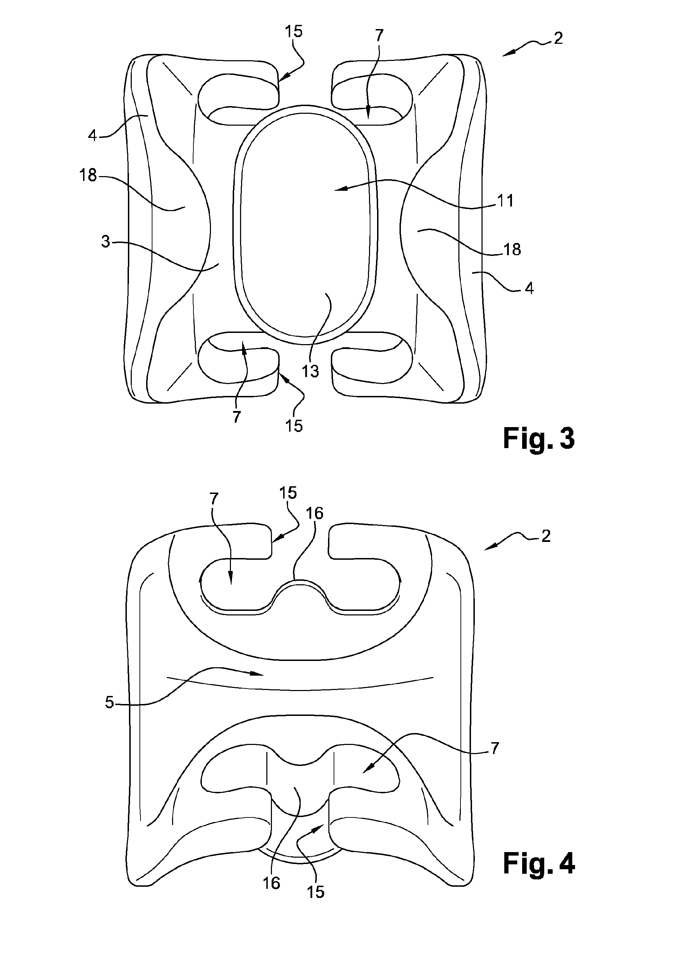

Le plot de fixation 11 comporte une tige 12 dont l'une des extrémités s'étend à partir de la surface extérieure de la portion centrale 3 et dont l'autre extrémité est équipée d'une tête 13. La tête 13 du plot de fixation délimite, avec la portion centrale 3, les portions latérales 4 et la tige 12 du plot de fixation, une gorge de retenue annulaire 14 destinée à retenir deux portions d'extrémité opposées de la boucle fermée du second cordage 8. Comme montré plus particulièrement sur la figure 3, la tête 13 du plot de fixation s'étend sensiblement perpendiculairement au plan défini par la gorge de guidage 5.

Le dispositif de guidage 2 comporte en outre une première et une deuxième ouvertures de passage 15 débouchant chacune respectivement dans l'une des lumières de guidage 7. Les première et deuxième ouvertures de passage 15 sont chacune agencée pour permettre l'introduction du second cordage 8 dans la lumière de guidage 7 correspondante. Chacune des première et deuxième ouvertures de passage 15 s'étend de préférence sensiblement parallèlement au plot de fixation 11. De préférence, chacune des première et deuxième ouvertures de passage 15 délimite un passage de largeur supérieure ou égale au diamètre du second cordage 8.

Le dispositif de guidage 2 comporte également des premiers moyens de retenue agencés pour retenir le second cordage 8 dans les lumières de guidage 7. Comme montré sur la figure 1, les premiers moyens de retenue comportent deux bossages de retenue 16 ménagés chacun respectivement en regard de l'une des première et deuxième ouvertures de passage 15. Chaque bossage de retenue 16 est agencé pour retenir des brins du second cordage 8 dans la lumière de guidage 7 correspondante. Chaque bossage de retenue 16 s'étend sensiblement parallèlement au plot de fixation 11.

Le dispositif de guidage 2 comporte avantageusement des deuxièmes moyens de retenue agencés pour retenir le premier cordage 6 dans la gorge de guidage 5. Les deuxièmes moyens de retenue délimitent un passage débouchant dans la gorge de guidage 5 et présentant une largeur inférieure à la largeur de la gorge de guidage 5. Comme montré plus particulièrement sur la figure 2, les deuxièmes moyens de retenue comportent deux retours de retenue 17 ménagés sur la portion centrale 3 et dirigés l'un vers l'autre.

Le dispositif de guidage 2 comporte de préférence également des troisièmes moyens de retenue agencés pour retenir les portions d'extrémité du second cordage 8 dans la gorge de retenue 14. De façon avantageuse, les troisièmes moyens de retenue et le plot de fixation 11 délimitent deux passages de largeur inférieure au diamètre du premier cordage 6.

Comme montré sur les figures 1 et 3, les troisièmes moyens de retenue comportent par exemple deux ergots de retenue 18 ménagés chacun respectivement sur l'une des portions latérales 4.

Les figures 5 et 6 représentent une variante de réalisation du dispositif de guidage 2 selon laquelle ce dernier est dépourvu de bossage de retenue 16. Selon cette variante de réalisation, chacune des ouvertures de passage 15 peut être conformée de manière à délimiter un passage présentant une largeur inférieure au diamètre du second cordage 8 afin d'assurer une retenue de ce dernier dans chaque lumière de guidage 7.

Il va maintenant être décrit deux procédés de fixation du dispositif de guidage 2 sur un point d'attache fixe 9. Selon ces deux procédés de fixation, la fixation du dispositif de guidage est assurée par deux passages de la boucle du second cordage 8 autour du plot de fixation 11.

Le premier procédé de fixation comporte les étapes suivantes consistant à :
- passer la boucle fermée du second cordage 8 autour du plot de fixation 11 de telle sorte qu'elle prenne appui contre un premier côté de la tige 12 du plot de fixation, cette étape nécessitant un écrasement de chaque brin de la boucle au niveau des ergots de retenue 18 pour permettre l'introduction de la boucle dans la gorge de retenue 14,
- introduire chaque brin de la boucle du second cordage 8 dans la lumière de guidage 7, opposée au côté de la tige 11 contre lequel prend appui la boucle, via l'ouverture de passage 15 correspondante, cette étape nécessitant, si le dispositif de guidage est pourvu de bossage de retenue 16, l'écrasement de chaque brin de la boucle au niveau du bossage de retenue 16 correspondant,
- introduire le premier cordage 6 dans la gorge de guidage 5,
- passer la boucle du second cordage 8 autour du point d'attache fixe 9,
- passer l'extrémité libre de la boucle du second cordage 8 autour du plot de fixation 11 de telle sorte qu'elle prenne appui contre un deuxième côté de la tige 12 du plot de fixation, opposé au premier côté de cette dernière, cette étape nécessitant un écrasement de chaque brin de la boucle au niveau des ergots de retenue 18 pour permettre l'introduction de la boucle dans la gorge de retenue 14, et
- introduire chaque brin de la boucle situé en regard de l'autre lumière de guidage 7 dans ladite lumière de guidage, via l'ouverture de passage 15 correspondante, cette étape nécessitant, si le dispositif de guidage est pourvu de bossage de retenue 16, l'écrasement de chaque brin de la boucle au niveau du bossage de retenue 16 correspondant.

Il doit être noté que l'étape d'introduction du premier cordage 6 dans la gorge de guidage 5 pourrait être réalisée après l'étape d'introduction de chaque brin de la boucle dans l'autre lumière de guidage 7.

La figure 5 représente un dispositif de guidage 2 fixé selon le premier procédé de fixation décrit ci-dessus. Selon un tel procédé de fixation, la gorge de guidage 5, et donc le premier cordage 6, s'étend parallèlement à l'axe du point d'attache 9. En outre, selon un tel procédé de fixation, le dispositif de guidage 2 permet une libération du premier cordage en tout point de ce dernier.

Le deuxième procédé de fixation comporte les étapes suivantes consistant à :
- passer la boucle du second cordage 8 autour du plot de fixation 11 de telle sorte qu'elle prenne appui contre une première partie latérale de la tige 12 du plot de fixation, cette étape nécessitant un écrasement du second cordage 8 au niveau de l'ergot de retenue 18 correspondant pour permettre l'introduction de la boucle dans la gorge de retenue 14,
- introduire chaque brin de la boucle du second cordage 8, situé en regard d'une lumière de guidage 7, dans la lumière de guidage 7 correspondante via l'ouverture de passage 15 correspondante, cette étape nécessitant, si le dispositif de guidage est pourvu de bossage de retenue 16, l'écrasement de chaque brin de la boucle au niveau du bossage de retenue 16 correspondant,
- passer la boucle du second cordage 8 autour du point d'attache fixe 9,
- passer l'extrémité libre de la boucle du second cordage 8 autour du plot de fixation 11 de telle sorte qu'elle prenne appui contre une deuxième partie latérale de la tige 12 du plot de fixation, opposée à la première partie latérale, cette étape nécessitant un écrasement de chaque brin de la boucle au niveau de l'ergot de retenue 18 correspondant pour permettre l'introduction de l'extrémité libre de la boucle dans la gorge de retenue 14,
- introduire chaque brin de la boucle, situé en regard d'une lumière de guidage 7, dans la lumière de guidage 7 correspondante via l'ouverture de passage 15 correspondante, cette étape nécessitant, si le dispositif de guidage est pourvu de bossage de retenue 16, l'écrasement de chaque brin de la boucle au niveau du bossage de retenue 16 correspondant, et
- introduire le premier cordage 6 dans la gorge de guidage 5 par l'une des extrémités de ce dernier.

Il doit être noté que l'étape de passage de la boucle du second cordage 8 autour du point d'attache fixe 9 pourrait être réalisée avant la première étape de passage de la boucle du second cordage 8 autour du plot de fixation 11 ou avant la première étape d'introduction de chaque brin de la boucle du second cordage 8 dans la lumière de guidage 7 correspondante. Dans ce cas, l'étape de passage de la boucle du second cordage 8 autour du point d'attache fixe 9 pourrait consister à disposer la boucle fermée du second cordage sur le point d'attache fixe 9 de telle sorte qu'une première et une deuxième portions d'extrémité de la boucle s'étendent de part et d'autre du point d'attache fixe.

La figure 6 représente un dispositif de guidage 2 fixé selon le deuxième procédé de fixation décrit ci-dessus. Selon un tel procédé de fixation, la gorge de guidage 5, et donc le premier cordage 6, s'étend perpendiculairement à l'axe du point d'attache 9.

Ainsi, le dispositif de guidage 2 selon l'invention permet, quelle que soit l'orientation du point d'attache utilisé ou de la pièce mobile à manoeuvrer, d'orienter la gorge de guidage 5 dans deux directions orthogonales en fonction du procédé de fixation sélectionné.

Comme il va de soi, l'invention ne se limite pas à la seule forme d'exécution de ce dispositif de guidage, décrite ci-dessus à titre d'exemple, elle en embrasse au contraire toutes les variantes de réalisation.

## Revendications

1. Dispositif de guidage (2) d'un cordage, comportant :
- une gorge de guidage (5), en forme générale de U, destinée à guider un premier cordage (6),
- deux lumières de guidage (7) destinées à guider une boucle fermée d'un second cordage (8) servant à la fixation du dispositif de guidage sur un point d'attache fixe (9) ou sur une pièce mobile à manoeuvrer, les deux lumières de guidage (7) s'étendant de part et d'autre du plan défini par la gorge de guidage (5), et
- un plot de fixation (11) destiné à fixer la boucle fermée du second cordage (8) sur le dispositif de guidage,
**caractérisé en ce qu'**il comporte en outre une première et une deuxième ouvertures de passage (15) débouchant chacune respectivement dans l'une des lumières de guidage (7), chacune des première et deuxième ouvertures de passage (15) étant agencée pour permettre l'introduction du second cordage (8) dans la lumière de guidage correspondante.

2. Dispositif de guidage d'un cordage selon la revendication 1, lequel comprend des premiers moyens de retenue agencés pour retenir le second cordage (8) dans les lumières de guidage (7).

3. Dispositif de guidage d'un cordage selon la revendication 2, dans lequel les premiers moyens de retenue comportent deux bossages de retenue (16) ménagés chacun respectivement en regard de l'une des première et deuxième ouvertures de passage (15), chaque bossage de retenue (16) étant agencé pour retenir des brins du second cordage (8) dans la lumière de guidage (7) correspondante.

4. Dispositif de guidage d'un cordage selon l'une des revendications 1 à 3, lequel comprend des deuxièmes moyens de retenue agencés pour retenir le premier cordage (6) dans la gorge de guidage (5).

5. Dispositif de guidage d'un cordage selon la revendication 4, dans lequel les deuxièmes moyens de retenue délimitent un passage débouchant dans la gorge de guidage (5) et présentant une largeur inférieure à la largeur de la gorge de guidage (5).

6. Dispositif de guidage d'un cordage selon l'une des revendications 1 à 5, lequel comprend une portion centrale (3) et deux portions latérales (4) disposées de part et d'autre de la portion centrale, la portion centrale et les deux portions latérales délimitant la gorge de guidage (5).

7. Dispositif de guidage d'un cordage selon la revendication 6, dans lequel les deuxièmes moyens de retenue comportent deux retours de retenue (17) ménagés sur la portion centrale (3) et dirigés l'un vers l'autre.

8. Dispositif de guidage d'un cordage selon la revendication 6 ou 7, dans lequel le plot de fixation (11) comporte une tige (12) dont l'une des extrémités s'étend à partir de la surface extérieure de la portion centrale (3) et dont l'autre extrémité est équipée d'une tête (13), la tête (13) du plot de fixation (11) délimitant, avec la portion centrale (3), les portions latérales (4) et la tige (12) du plot de fixation, une gorge de retenue (14) destinée à retenir deux portions d'extrémité opposées de la boucle fermée du second cordage (8).

9. Dispositif de guidage d'un cordage selon la revendication 8, lequel comprend des troisièmes moyens de retenue agencés pour retenir les portions d'extrémité du second cordage (8) dans la gorge de retenue (14).

10. Dispositif de guidage d'un cordage selon la revendication 9, dans lequel les troisièmes moyens de retenue comportent deux ergots de retenue (18) ménagés chacun respectivement sur l'une des portions latérales (4).

11. Ensemble comprenant un dispositif de guidage (2) selon l'une des revendications 1 à 10, et une boucle fermée d'un cordage (6) destiné à servir à la fixation du dispositif de guidage sur un point d'attache fixe (11) ou sur une pièce mobile à manoeuvrer.
